# EUROPÄISCHE PATENTSCHRIFT

(11) **EP 0 706 875 B1**
(45) Veröffentlichungstag und Bekanntmachung des Hinweises auf die Patenterteilung: **18.08.2004**
(21) Anmeldenummer: 95115207.3
(22) Anmeldetag: 27.09.1995
(51) Int. Cl.: B29C 69/00

(54) **Verfahren, spritzgegossene Laufrolle und Spritzgiessform zur Herstellung einer Laufrolle**
Method, injection moulded roller and injection mould for manufacturing a roller
Procédé, galet moulé par injection et moule d'injection pour fabriquer un galet

(30) Priorität: 11.10.1994 DE 4436286
(43) Veröffentlichungstag der Anmeldung: 17.04.1996
(73) Patentinhaber: Hachtel, Friedrich, 73431 Aalen (DE)
(72) Erfinder: Hachtel, Friedrich, D-73431 Aalen (DE)
(74) Vertreter: Möbus, Daniela, Dr.-Ing.

(56) Entgegenhaltungen:
- EP-A- 0 156 089
- DE-A- 3 016 345
- FR-A- 2 315 379
- US-A- 3 895 844

## Beschreibung

Die Erfindung betrifft ein Verfahren, eine spritzgegossene Laufrolle und eine Spritzgießform zur Herstellung einer Laufrolle.

Aus Kunststoff gespritzte Laufrollen sind für die unterschiedlichsten Zwecke bereits bekannt. Diese Rollen bestehen in der Regel aus zwei, in getrennten Formen gespritzten Teilen, von denen ein Teil die Lauffläche und der andere Teil eine Buchse zur Aufnahme einer Achse oder eines Achszapfens bilden. Üblicherweise werden zur Herstellung solcher Rollen die beiden Teile zunächst einzeln gespritzt, aus den Spritzgießformen ausgeworfen und anschließend in einem weiteren Arbeitsgang jeweils paarweise zusammenmontiert. Dieses bekannte Herstellungsverfahren der Laufrollen ist aufwendig und teuer, da nach dem Gießen ein zweiter Arbeitsgang zur Endmontage der Laufrolle erforderlich ist.

Aus der FR-A-2 315 379 ist ein Verfahren zur Herstellung eines Rollrings für Gardinenschienen, der eine auf einen Achszapfen eines Lagerteils aufgesprengte Rolle aufweist, bekannt. Nach diesem Verfahren werden Lagerteil und Rolle in getrennten, einander gegenüberliegenden Hohlräumen einer Spritzgießform gespritzt, anschließend die Spritzgießform in seitlicher Richtung geöffnet und Rolle und Lagerteil mit einem Teil der Spritzgießform aufeinander gedrückt.

In der DE-A-30 16 345 ist ein Spritzgießverfahren zur Herstellung eines Wälzkörperhalters mit Wälzkörpern beschrieben, wobei die Wälzkörper und die zugehörigen Lagerzapfen des Wälzkörperhalters in miteinander verbundenen Hohlräumen gespritzt werden. Anschließend werden nach Öffnen der Form die Lagerzapfen durch seitliches Verfahren eines Schiebers sowie axiales Herausbewegen aus der zugehörigen Spritzgießformhälfte entformt, bevor die Wälzkörper auf sie aufgedrückt werden können.

Die US 3,895,844 A beschreibt ein Rad für Roller-Skates mit einem inneren Teil, das eine Achse aufnimmt, und einem äußeren Teil, das die Lauffläche des Rades bildet. Das äußere Teil ist aus einem nachgiebigen, weichen Material gefertigt und drehfest auf dem inneren Teil befestigt.

Der Erfindung liegt die Aufgabe zugrunde, ein Verfahren und eine Spritzgießform zur Herstellung einer Laufrolle zu schaffen, die eine kostengünstige Herstellung von Laufrollen mit guten Laufeigenschaften ermöglichen.

Die gestellte Aufgabe wird mit einem Verfahren zur Herstellung einer Laufrolle mit den Merkmalen des Anspruchs 1 gelöst.

Vorteilhafterweise können hierbei gleichzeitig mehrere Laufrollenteile in der Spritzgießform gegossen und zu fertigen Laufrollen montiert werden. Ein Laufrollenteil bildet hierbei die Lauffläche und der andere eine zentrale Aufnahmeöffnung für eine Achse oder einen Achszapfen. In einer besonders vorteilhaften Ausgestaltung der Laufrolle können die beiden Rollenteile durch eine Rastverbindung miteinander unlösbar gekoppelt sein. Dadurch, dass jeweils zueinander gehörige Teile, die anschließend zu einer Laufrolle montiert werden, in genau zugeordneten Hohlräumen der Spritzgießform gefertigt werden, können kleinere Fehler im Hohlraum für den einen Rollenteil durch entsprechende Korrekturen des Hohlraumes für den anderen Teil ausgeglichen werden. Auf diese Weise ist auch bei Verwendung von Vielfachformen eine Optimierung der Formen und der Prozesssteuerung beim Spritzgießen der Rollenteile möglich. Die nach dem erfindungsgemäßen Verfahren gefertigten Rollen haben hervorragende Laufeigenschaften. Eine Produktion von Ausschussware ist mit diesem Verfahren praktisch ausgeschlossen.

Außerdem ist das erfindungsgemäße Verfahren durch die direkte Montage der beiden Rollenteile noch in der Spritzgießform vor dem Auswurf der fertigen Laufrolle äußerst schnell und preisgünstig, da ein gesonderter Montageschritt nach dem Spritzgießen der beiden Rollenteile entfällt. Auch ist die Bereitstellung besonderer Werkzeuge zum Ergreifen von einzelnen Rollenteilen aus einem Sammelbehälter und anschließender Montage hier nicht mehr notwendig.

Die aus Kunststoff spritzgegossene Laufrolle weist die Merkmale des Anspruchs 3 auf.

Die Spritzgießform zur Herstellung einer aus zwei in axialer Richtung zusammengesetzten Teilen bestehenden Laufrolle gemäß der Erfindung weist die Merkmale des Anspruchs 5 auf. Nachfolgend werden anhand der Zeichnung ein erfindungsgemäßes Verfahren zur Herstellung einer Laufrolle und die dazugehörigen Spritzgußformen näher erläutert.

Es zeigen:
- Fig. 1: einen Teilschnitt durch eine Spritzgießform in einem ersten Verfahrensstadium zur Herstellung einer Laufrolle;
- Fig. 2: einen der Fig. 1 entsprechenden Teilschnitt durch eine Spritzgießform in einem zweiten Verfahrensstadium;
- Fig. 3: einen den Fig. 1 und 2 entsprechenden Teilschnitt durch eine Spritzgießform in einem dritten Verfahrensstadium;
- Fig. 4: einen den Fig. 1 bis 3 entsprechenden Teilschnitt durch eine Spritzgießform in einem vierten Verfahrensstadium.

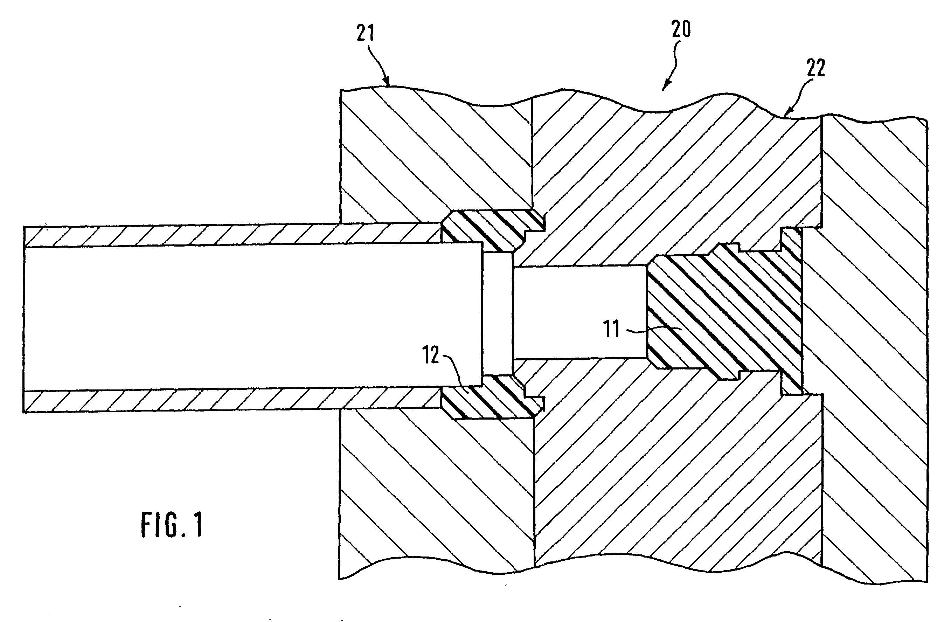

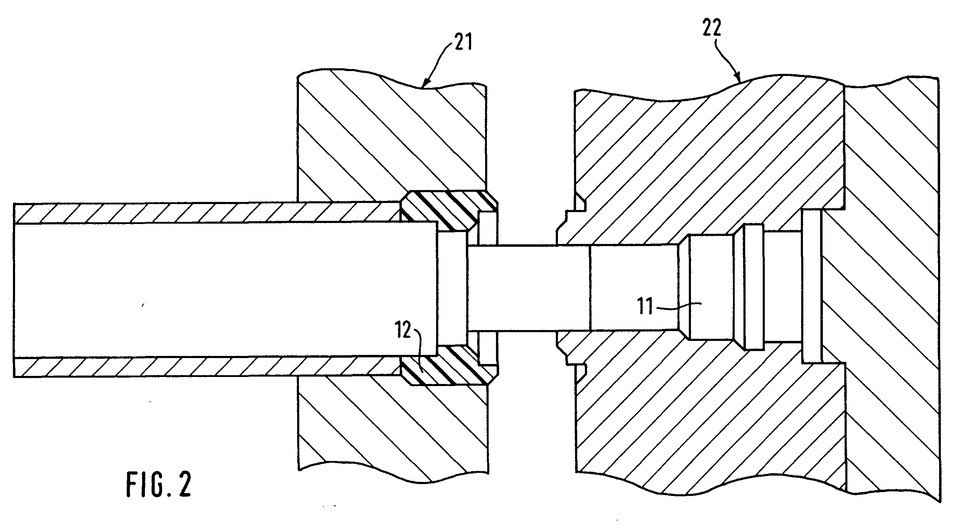

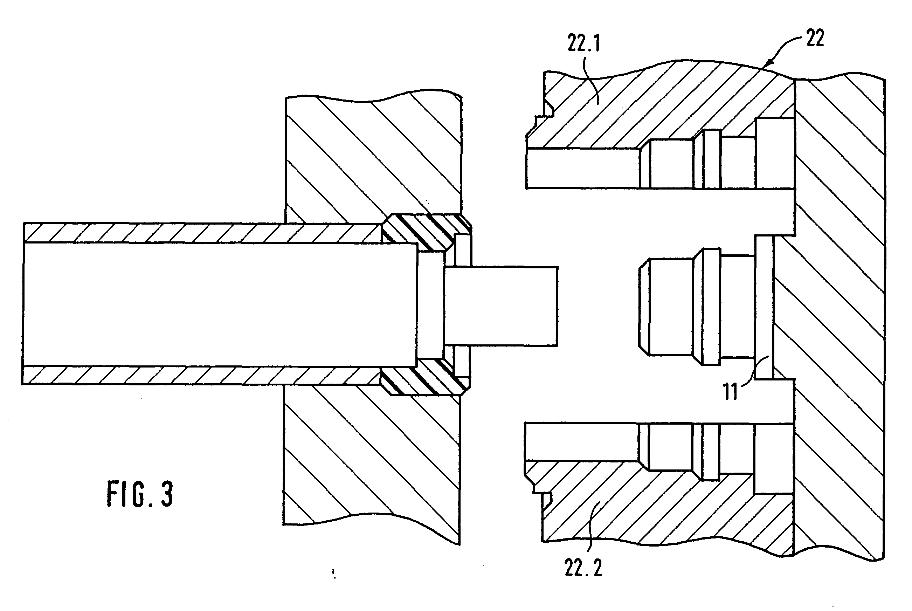

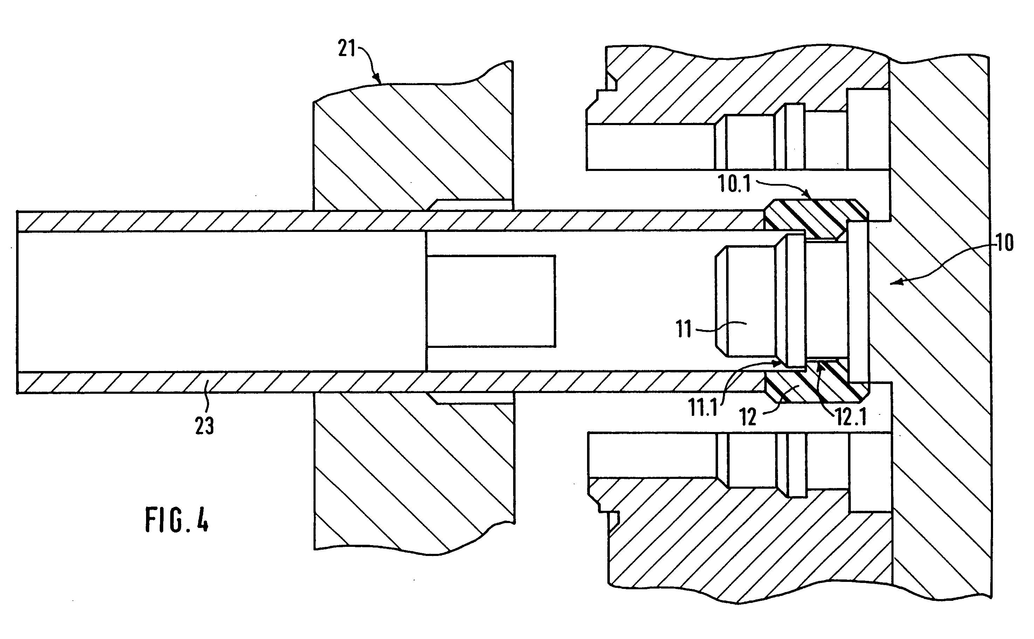

In den Fig. 1 bis 4 ist das Herstellungsverfahren einer aus Fig. 4 im montierten Zustand ersichtlichen Laufrolle 10 dargestellt, die aus einem inneren, eine zentrale Öffnung zur Aufnahme einer Achse oder eines Achszapfen aufweisenden ersten Teil 11 und einem darauf aufgesetzten, die Lauffläche 10.1 der Laufrolle 10 bildenden zweiten Teil 12 besteht. Hierzu werden gemäß Fig. 1 in einer Spritzgießform 20, die zwei auseinanderbewegbare Formhälften 21 und 22 aufweist, die Teile 11 und 12 in getrennten Hohlräumen gegossen. Die Hohlräume für die Teile 11 und 12 sind dabei koaxial zueinander angeordnet. Nach dem Spritzgießen werden, wie in Fig. 2 dargestellt ist, zunächst die beiden Formhälften 21 und 22 auseinandergefahren. Die Rollenteile 11 und 12 werden dabei in den Formhälften 21 und 22 festgehalten. Anschließend wird der Rollenteil 11 durch seitliches Öffnen zweier Formteile 22.1 und 22.2 der Gießformhälfte 22 entformt. (Fig. 3). Auch jetzt bleibt der Teil 11 jedoch noch in der Formhälfte 22 festgehalten. Im letzten Fertigungsschritt wird nun auf den von vorn und in radialer Richtung frei zugänglichen Rollenteil 11 der Rollenteil 12 mittels eines beweglich in der Formhälfte 21 geführten Hohlzylinders 23 auf den Rollenteil 11 gedrückt. Beide Rollenteile 11 und 12 sind aus begrenzt elastischem Kunststoff gefertigt und weisen Rastvorsprünge 11.1 und 12.1 auf, die nach der Endmontage der Laufrolle 10 einander hintergreifen, so daß eine unlösbare Koppelung der beiden Teile 11 und 12 entsteht. Durch Zurückziehen des hohlzylindrischen Teils 23 wird anschließend die fertige Laufrolle 10 aus der Spritzgießform 20 ausgeworfen. Durch die Möglichkeit, die Hohlräume für die beiden Laufrollenteile 11 und 12 exakt aufeinander abzustimmen, kann erreicht werden, daß bei allen hergestellten Laufrollen 10 der äußere Teil 12 einwandfrei auf dem inneren Teil 11 abrollt und die Rolle 10 somit hervorragende Laufeigenschaften aufweist.

## Patentansprüche

1. Verfahren zur Herstellung einer Laufrolle, die aus zwei in axialer Richtung zusammengesetzten Teilen, einem die Lauffläche (10.1) bildenden Rollenteil (11) und einem anderen eine zentrale Aufnahmeöffnung als Laufrolle (10) für eine Achse oder für einen Achszapfen aufweisenden Rollenteil (12), besteht, wobei die beiden Rollenteile (11, 12) in gesonderten Hohlräumen in gegenüberliegenden Hälften (21, 22) einer gemeinsamen Spritzgießform (20) gleichzeitig gespritzt werden, mit den folgenden Schritten :
- Öffnen der Spritzgießform (20) durch Auseinanderbewegen der beiden Hälften (21, 22), wobei die beiden Rollenteile (11, 12) an den Hälften (21, 22) der Spritzgießform festgehalten werden,
- Entformung des in radialer Richtung innen liegenden Teils (11) der Laufrolle (10) durch seitliches Öffnen der zugehörigen Spritzgießformhälfte (22),
- Koppelung der beiden Teile (11, 12) durch Aufeinanderdrücken mittels mindestens eines Teils (23) der Spritzgießform (20) zu einer fertigen Laufrolle (10) und Auswurf der Laufrolle (10) aus der Spritzgießform (20).

2. Verfahren nach Anspruch 1, **dadurch gekennzeichnet, dass** gleichzeitig mehrere Laufrollenteile (11, 12) in der Spritzgießform (20) gegossen und zu fertigen Laufrollen (10) montiert werden.

3. Aus Kunststoff spritzgegossene Laufrolle, die aus zwei in axialer Richtung zusammengesetzten Teilen besteht und nach dem Verfahren nach Anspruch 1 oder 2 herstellbar ist, wobei der eine Teil (12) die Lauffläche (10.1) der Laufrolle (10) und der andere Teil (11) eine zentrale Aufnahmeöffnung der Laufrolle (10) für eine Achse oder für Achszapfen bildet und der die Lauffläche (10.1) bildende äußere Teil (12) auf dem inneren Teil (11) abrollend angeordnet ist.

4. Laufrolle nach Anspruch 3, **dadurch gekennzeichnet, dass** die beiden Rollenteile (11, 12) durch eine Rastverbindung (11.1, 12.1) miteinander unlösbar gekoppelt sind.

5. Spritzgießform zur Herstellung einer aus zwei in axialer Richtung zusammengesetzten Teilen bestehenden Laufrolle (10), aus einem die Lauffläche (10.1) bildenden Teil (11) und einem anderen eine zentrale Aufnahmeöffnung der Laufrolle (10) für eine Achse oder für einen Achszapfen aufweisenden Teil (12), nach dem Verfahren gemäß Anspruch 1 oder 2, wobei die Spritzgießform von zwei in axialer Richtung gegeneinander verfahrbaren Formhälften (21, 22) gebildet ist, die gemeinsam mindestens einen ersten Hohlraum zur Formung des ersten Laufrollenteils (11) und mindestens einen zweiten, gesonderten Hohlraum zur Formung des zweiten Laufrollenteils (12) bilden, wobei die ersten und zweiten Hohlräume jeweils koaxial zueinander angeordnet sind, und wobei mindestens eine der Formhälften (21) einen in axialer Richtung beweglichen Teil (23) zum Aufeinanderdrücken der beiden Laufrollenteile (11, 12) aufweist, wobei eine der Formhälften (22) in seitlicher Richtung zu öffnen ist, derart, dass der erste Laufrollenteil (11) weiter in der Formhälfte (22) festgehalten wird.

## Claims

1. Method for producing a roller comprising two elements assembled together in an axial direction, one roller element (11) forming the contact surface (10.1) and another roller element (12) incorporating a central locating opening to act as a roller (10) for a shaft or for a pivot, **characterised in that** the two roller elements (11, 12) are simultaneously injection-moulded in separate cavities in opposing halves (21, 22) of a common injection moulding tool (20), the method featuring the following steps:
- opening the injection moulding tool (20) by moving apart the two halves (21, 22) and keeping hold of the two roller elements (11, 12) on the halves (21, 22) of the injection moulding tool,
- demoulding the element (11) of the roller (10) that is situated radially on the inside by opening the associated half (22) of the injection mould in a lateral direction,
- coupling the two elements (11, 12) by pressing them onto one another by means of at least one element (23) of the injection moulding tool (20) to produce a finished roller (10), and ejecting the roller (10) from the injection moulding tool (20).

2. Method according to claim 1, **characterised in that** a plurality of roller elements (11, 12) are simultaneously cast in the injection moulding tool (20) and assembled to produce finished rollers (10).

3. A roller that has been injection moulded from plastic, which comprises two elements assembled together in an axial direction and which can be produced by the method according to claim 1 or 2, **characterised in that** one element (12) forms the contact surface (10.1) of the roller (10) and the other element (11) forms a central locating opening in the roller (10) for a shaft or for pivots and the outer element (12) forming the contact surface (10.1) is arranged so as to roll off the inner element (11).

4. Roller according to claim 3, **characterised in that** the two roller elements (11, 12) are coupled to one another in a non-releasable manner by an interlocking connection (11.1, 12.1).

5. Injection moulding tool for producing a roller (10) comprising two elements assembled together in an axial direction, from one element (11) forming the contact surface (10.1) and another element (12) incorporating a central locating opening in the roller (10) for a shaft or for a pivot, using the method according to claim 1 or 2, **characterised in that** the injection moulding tool is constituted by two mould halves (21, 22) which are adapted to move in an axial direction in relation to one another and which together form at least one first cavity for moulding the first roller element (11) and at least one second, separate cavity for moulding the second roller element (12), the first and second cavities being arranged coaxially with one another in each case, and **in that** at least one of the mould halves (21) features an element (23) that can be moved in an axial direction to press the two roller elements (11, 12) onto one another, and **in that** one of the mould halves (22) is designed to be opened in a lateral direction, in such a manner that the first roller element (11) is still held in the mould half (22).

## Revendications

1. Procédé pour la fabrication d'un galet qui est constitué de deux parties assemblées dans la direction axiale, une partie de galet (11) formant la surface de roulement (10.1) et une autre partie de galet (12) pourvue d'une ouverture centrale de logement du galet (10) pour un axe ou pour un tourillon, les deux parties de galet (11, 12) étant injectées simultanément dans des cavités distinctes dans des moitiés opposées (21, 22) d'un moule d'injection commun (20), avec les étapes suivantes :
- ouverture du moule d'injection (20) par écartement des deux moitiés (21, 22) , les deux parties de galet (11, 12) étant maintenues sur les moitiés (21, 22) du moule d'injection,
- démoulage de la partie (11) du galet (10) située à l'intérieur dans la direction radiale par ouverture latérale de la moitié de moule d'injection associée (22),
- accouplement des deux parties (11, 12) par emboîtement au moyen d'au moins une partie (23) du moule d'injection (20) pour obtenir un galet fini (10) et éjection du galet (10) hors du moule d'injection (20).

2. Procédé selon la revendication 1, **caractérisé en ce que** plusieurs parties de galet (11, 12) sont simultanément moulées dans le moule d'injection (20) et montées sous forme de galets finis (10).

3. Galet moulé par injection en matière plastique, qui est constitué de deux parties assemblées dans la direction axiale et est réalisable selon le procédé selon la revendication 1 ou 2, l'une des parties (12) formant la surface de roulement (10.1) du galet (10) et l'autre partie (11) formant une ouverture centrale de logement du galet (10) pour un axe ou pour un tourillon, et la partie extérieure (12) formant la surface de roulement (10.1) étant disposée à roulement sur la partie intérieure (11).

4. Galet selon la revendication 3, **caractérisé en ce que** les deux parties de galet (11, 12) sont accouplées entre elles de manière indémontable par une liaison encliquetée (11.1, 12.1).

5. Moule d'injection pour la fabrication d'un galet (10) constitué de deux parties assemblées dans la direction axiale, une partie (11) formant la surface de roulement (10.1) et une autre partie (12) pourvue d'une ouverture centrale de logement du galet (10) pour un axe ou pour un tourillon, selon le procédé conforme à la revendication 1 ou 2, le moule d'injection étant formé de deux moitiés de moule (21, 22) déplaçables l'une par rapport à l'autre dans la direction axiale qui forment ensemble au moins une première cavité pour le moulage de la première partie de galet (11) et au moins une deuxième cavité distincte pour le moulage de la deuxième partie de galet (12), les première et deuxième cavités étant disposées coaxialement l'une à l'autre, et au moins une des moitiés de moule (21) comportant une partie (23) mobile dans la direction axiale pour emboîter les deux parties de galet (11, 12), une des moitiés de moule (22) pouvant s'ouvrir dans la direction latérale, de façon que la première partie de galet (11) reste maintenue dans la moitié de moule (22).
